# EUROPEAN PATENT APPLICATION

(11) **EP 4 535 736 A1**
(43) Date of publication of application: **09.04.2025**
(21) Application number: 23815753.1
(22) Date of filing: 15.05.2023
(51) Int. Cl.: H04L 25/49, H04L 12/28, H04L 61/50

(54) **TERMINAL DEVICE AND COMMUNICATION SYSTEM**

(30) Priority: 31.05.2022 JP 2022088385
(71) Applicant: Panasonic Intellectual Property Management Co., Ltd., Kadoma-shi, Osaka 571-0057 (JP)
(72) Inventor: SAKAMOTO Mitsuhiro, Kadoma-shi, Osaka 571-0057 (JP)
(74) Representative: SSM Sandmair
(86) International application number: PCT/JP2023/018116
(87) International publication number: WO 2023/233993

(57) **Abstract**

A communication address of a terminal device is appropriately set. Terminal device (10) is a terminal device for which a communication address is set, and has the following configuration. That is, terminal device (10) includes input terminal (Pi) to which pulse repetition signal (sp) for setting a communication address is input, signal converter (30) that converts the frequency (or the duty ratio) of pulse repetition signal (sp) input to input terminal (Pi) and outputs converted pulse repetition signal (sp), and output terminal (Po) that outputs converted pulse repetition signal (sp) to another terminal device (10).

## Description

### TECHNICAL FIELD

The present disclosure relates to a terminal device for which a communication address is set, and a communication system including the terminal device.

### BACKGROUND ART

Conventionally, a communication system including a plurality of terminal devices and a management device that controls the plurality of terminal devices is known. In such a communication system, by setting a communication address to each of the plurality of terminal devices, each terminal device can be individually controlled by using the management device.

PTL 1 discloses a method of setting a communication address to each terminal device. In the method disclosed in PTL 1, first, a DC voltage of a constant value is output to a communication line connecting the management device and the plurality of terminal devices. Then, the terminal device measures the DC voltage that attenuates in accordance with a transmission distance, and sets a communication address allocated on the basis of the measured DC voltage as the communication address of the terminal device.

### Citation List

### Patent Literature

PTL 1: Unexamined Japanese Patent Publication No. 2005-51507

### SUMMARY OF THE INVENTION

However, in the method disclosed in PTL 1, since the attenuation amount of the voltage varies depending on the transmission distance of the DC voltage, the voltage value changes when the length of the communication line changes. Therefore, a communication address different from the target communication address may be set for the terminal device.

In view of the above problem, the present disclosure provides a terminal device and a communication system capable of appropriately setting a communication address.

A terminal device according to an aspect of the present disclosure is a terminal device for which a communication address is set, the terminal device including an input terminal to which a pulse repetition signal for setting the communication address is input, a signal converter that converts a frequency or a duty ratio of the pulse repetition signal input to the input terminal and outputs a converted pulse repetition signal, and an output terminal that outputs the converted pulse repetition signal to another terminal device different from the terminal device.

A communication system according to another aspect of the present disclosure includes the plurality of terminal devices described above and a management device that outputs the pulse repetition signal. The plurality of terminal devices include at least a first terminal device, a second terminal device, and a third terminal device, the management device is connected to the input terminal of the first terminal device, the output terminal of the first terminal device is connected to the input terminal of the second terminal device, and the output terminal of the second terminal device is connected to the input terminal of the third terminal device.

The terminal device and the communication system of the present disclosure can appropriately set the communication address.

### BRIEF DESCRIPTION OF THE DRAWINGS

Fig. 1 is a diagram illustrating a schematic configuration of a communication system according to an exemplary embodiment.
Fig. 2 is a diagram illustrating a circuit configuration of a terminal device according to the exemplary embodiment.
Fig. 3 is a diagram illustrating a connection configuration of a management device and a plurality of terminal devices included in the communication system according to the exemplary embodiment.
Fig. 4 is a diagram illustrating an example of a storage table stored in advance in the terminal devices.
Fig. 5 is a diagram illustrating an example of a signal input to a signal converter of the terminal device and a signal output from the signal converter.
Fig. 6 is a diagram illustrating another example of the signal input to the signal converter of the terminal device and the signal output from the signal converter.
Fig. 7 is a diagram illustrating a schematic configuration of a communication system according to a modification of the exemplary embodiment.
Fig. 8 is a diagram illustrating a circuit configuration of a terminal device according to a modification of the exemplary embodiment.
Fig. 9 is a diagram illustrating a connection configuration of a management device and a plurality of terminal devices included in a communication system according to a modification of the exemplary embodiment.

### DESCRIPTION OF EMBODIMENT

Hereinafter, an exemplary embodiment will be specifically described with reference to the drawings. Note that each of the exemplary embodiments described below illustrates a specific example of the present disclosure. Numerical values, shapes, materials, constituent elements, arrangement positions and connection modes of the constituent elements, steps, order of the steps, and the like illustrated in the following exemplary embodiments are merely examples, and therefore are not intended to limit the present disclosure. In addition, among the constituent elements in the following exemplary embodiment, the constituent elements that are not described in the independent claims representing an implementation according to a mode of the present disclosure are described as optional constituent elements. Implementations of the present disclosure are not limited to the current independent claims, but may also be expressed by other independent claims.

Each drawing is a schematic diagram, and is not necessarily strictly illustrated. In each drawing, substantially the same configurations are designated by the same reference signs, and duplicate description may be omitted or simplified.

### (Exemplary embodiments)

### [Configurations of communication system and terminal device]

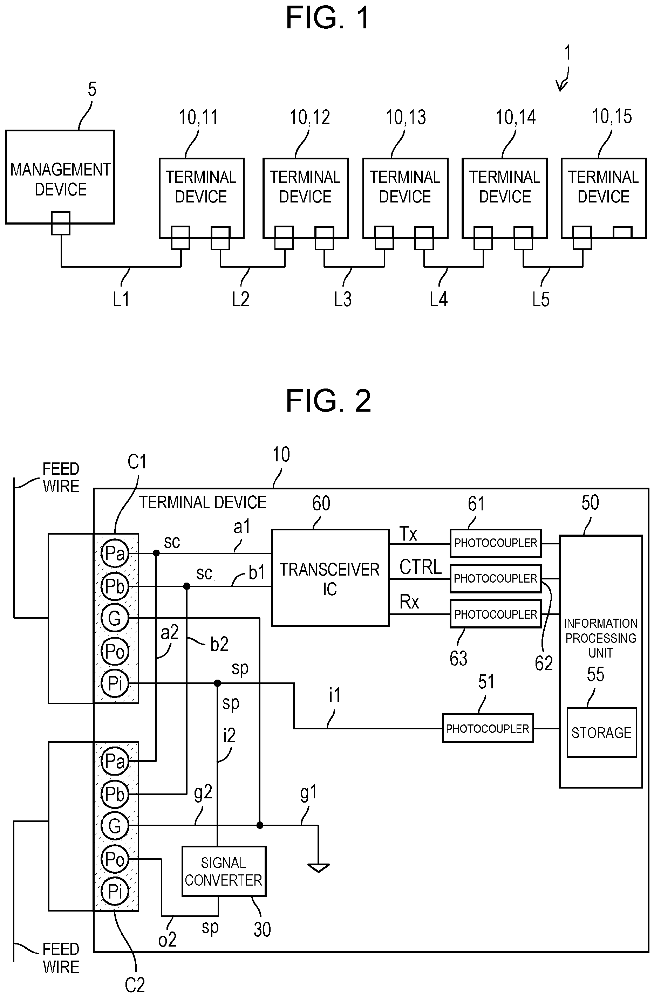

Configurations of a communication system according to an exemplary embodiment and a terminal device included in the communication system will be described with reference to Figs. 1 to 6.

Fig. 1 is a diagram illustrating a schematic configuration of communication system 1 according to the exemplary embodiment.

As illustrated in Fig. 1, communication system 1 includes management device 5 and a plurality of terminal devices 11, 12, 13, 14, and 15. Note that, in communication system 1, a power supply line for supplying power to each of management device 5 and terminal device 11 to 15 is separately provided.

Management device 5 is a device that controls the plurality of terminal devices 11 to 15, and is, for example, a master controller. The plurality of terminal devices 11 to 15 are devices that operate on the basis of a control signal output from management device 5, and are, for example, drive devices such as a motor, or electric devices such as an air conditioner, a lighting device, an imaging device, a display, and a communication device.

Management device 5 and the plurality of terminal devices 11 to 15 are daisy-chained by a plurality of feed wires L1 to L5. Feed wires L1 to L5 are, for example, cables with connectors having a plurality of communication lines. In this example, management device 5 and terminal device 11 are connected by feed wire L1, terminal device 11 and terminal device 12 are connected by feed wire L2, terminal device 12 and terminal device 13 are connected by feed wire L3, terminal device 13 and terminal device 14 are connected by feed wire L4, and terminal device 14 and terminal device 15 are connected by feed wire L5.

In this manner, in communication system 1, terminal device 11, terminal device 12, terminal device 13, terminal device 14, and terminal device 15 are connected in series in that order from management device 5 toward a downstream side in a communication path starting from management device 5. A communication address for bus communication with management device 5 is set for each of terminal devices 11 to 15. The communication address is an address allocated in the system of communication system 1. In the present exemplary embodiment, the communication address of each of terminal devices 11 to 15 is set by using management device 5, terminal devices 11 to 15, and feed wires L1 to L5.

Hereinafter, some or all of the plurality of terminal devices 11 to 15 may be referred to as terminal device 10. The number of the plurality of terminal devices 10 is not limited to five, and may be two or more and four or less, or six or more. The connection order of the plurality of terminal devices 11 to 15 may be determined in advance.

Fig. 2 is a diagram illustrating a circuit configuration of terminal device 10 according to the exemplary embodiment.

As illustrated in Fig. 2, terminal device 10 includes connectors C1 and C2 connected to the feed wire, signal converter 30 and information processing part 50 to which pulse repetition signal sp for setting a communication address is input, and transceiver integrated circuit (transceiver IC) 60.

Signal converter 30 is a circuit that converts input pulse repetition signal sp and outputs converted pulse repetition signal sp. Information processing part 50 is a circuit that sets a communication address on the basis of pulse repetition signal sp, and is, for example, a microprocessor. Information processing part 50 controls a device body of terminal device 10 and transceiver IC 60. Detailed configurations of signal converter 30 and information processing part 50 will be described later.

Transceiver IC 60 is an integrated circuit (IC) for performing communication between management device 5 and the plurality of terminal devices 11 to 15, and performs bus communication on the basis of a communication standard such as RS485, for example. Transceiver IC 60 receives control signal sc output from management device 5, and outputs signal Rx to information processing part 50 via photocoupler 63. Transceiver IC 60 receives the signal output from information processing part 50 through photocoupler 61, and transmits signal Tx to management device 5. Transmission and reception by transceiver IC 60 are switched by control signal CTRL that is a high signal and a low signal input to transceiver IC 60 via photocoupler 62.

Each of connectors C1, C2 is, for example, a receptacle connector, and is fixed to the device body of terminal device 10. Connector C1 and connector C2 have the same terminal arrangement. Each of connectors C1, C2 includes bus communication terminals Pa and Pb, ground terminal G, input terminal Pi, and output terminal Po.

Bus communication terminals Pa, Pb are terminals used when terminal device 10 performs bus communication with management device 5. Bus communication terminals Pa, Pb are connected to transceiver IC 60 via an internal wire of terminal device 10.

For example, bus communication terminal Pa of connector C1 is connected to transceiver IC 60 via one internal wire a1 conductive to bus communication terminal Pa, and is connected to bus communication terminal Pa of connector C2 via the other internal wire a2 conductive to bus communication terminal Pa. Note that one internal wire a1 and the other internal wire a2 may be directly connected to bus communication terminal Pa of connector C1.

For example, bus communication terminal Pb of connector C1 is connected to transceiver IC 60 via one internal wire b1 conductive to bus communication terminal Pb, and is connected to bus communication terminal Pb of connector C2 via the other internal wire b2 conductive to bus communication terminal Pb. Note that one internal wire b1 and the other internal wire b2 may be directly connected to bus communication terminal Pb of connector C1.

Control signal sc output from management device 5 is transmitted to transceiver IC 60 via the feed wire, bus communication terminal Pa, Pb of connector C1, and one internal wire a1, b1. Control signal sc output from management device 5 is transmitted to bus communication terminal Pa, Pb of connector C2 via the feed wire, bus communication terminal Pa, Pb of connector C1, and the other internal wire a2, b2.

Ground terminal G is a terminal connected to a ground line in feed wires L1 to L5, and is set to a ground potential. For example, ground terminal G of connector C1 is connected to a signal ground via one internal wire g1 conductive to ground terminal G, and is connected to ground terminal G of connector C2 via the other internal wire g2 conductive to ground terminal G. One internal wire g1 and the other internal wire g2 may be directly connected to ground terminal G of connector C1.

Input terminal Pi and output terminal Po are terminals used for setting a communication address of terminal device 10.

Input terminal Pi of connector C1 is connected to information processing part 50 and signal converter 30 via the internal wire of terminal device 10. For example, input terminal Pi of connector C1 is connected to information processing part 50 via one internal wire i1 conductive to input terminal Pi and photocoupler 51, and is connected to an input part (input-side terminal) of signal converter 30 via the other internal wire i2 conductive to input terminal Pi. Note that one internal wire i1 and the other internal wire i2 may be directly connected to input terminal Pi of connector C1. Photocoupler 51 may be provided inside information processing part 50. No internal wire is connected to output terminal Po of connector C1.

Output terminal Po of connector C2 is connected to an output part (output-side terminal) of signal converter 30 via internal wire o2 of terminal device 10. Note that no internal wire is connected to input terminal Pi of connector C2.

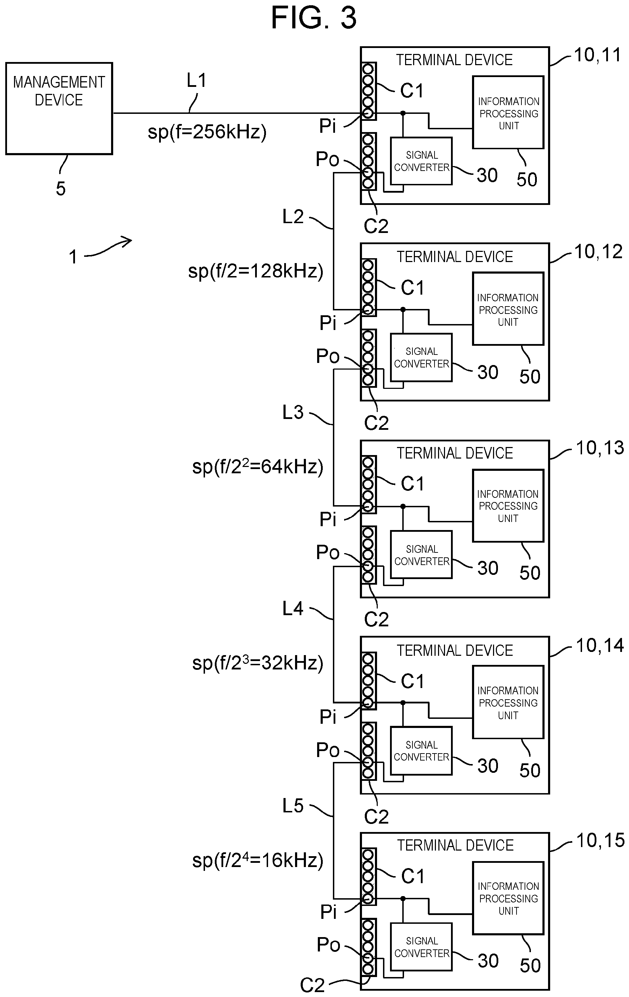

Fig. 3 is a diagram illustrating a connection configuration of management device 5 and the plurality of terminal devices 10 included in communication system 1. Note that, in communication system 1, a power supply line and a bus line for performing bus communication are separately provided.

As illustrated in Fig. 3, management device 5 is connected to input terminal Pi of connector C1 of terminal device 11 via feed wire L1.

Terminal device 11 is a first terminal device closest to management device 5 in the communication path starting from management device 5. Input terminal Pi of connector C1 of terminal device 11 is connected to the input part of signal converter 30 of terminal device 11, and the output part of signal converter 30 is connected to output terminal Po of the connector C2 of terminal device 11. Output terminal Po of connector C2 of terminal device 11 is connected to input terminal Pi of connector C1 of terminal device 12 via feed wire L2.

Terminal device 12 is a second terminal device second closest to management device 5 in the communication path starting from management device 5. Input terminal Pi of connector C1 of terminal device 12 is connected to the input part of signal converter 30 of terminal device 12, and the output part of signal converter 30 is connected to output terminal Po of the connector C2 of terminal device 12. Output terminal Po of connector C2 of terminal device 12 is connected to input terminal Pi of connector C1 of terminal device 13 via feed wire L3.

Terminal device 13 is a third terminal device third closest to management device 5 in the communication path starting from management device 5. Input terminal Pi of connector C1 of terminal device 13 is connected to the input part of signal converter 30 of terminal device 13, and the output part of signal converter 30 is connected to output terminal Po of the connector C2 of terminal device 13. Output terminal Po of connector C2 of terminal device 13 is connected to input terminal Pi of connector C1 of terminal device 14 via feed wire L4.

Terminal device 14 is a fourth terminal device fourth closest to management device 5 in the communication path starting from management device 5. Input terminal Pi of connector C1 of terminal device 14 is connected to the input part of signal converter 30 of terminal device 14, and the output part of signal converter 30 is connected to output terminal Po of the connector C2 of terminal device 14. Output terminal Po of connector C2 of terminal device 14 is connected to input terminal Pi of connector C1 of terminal device 15 via feed wire L5.

Terminal device 15 is a terminal device at a terminal end farthest from management device 5 in the communication path starting from management device 5. Input terminal Pi of connector C1 of terminal device 15 is connected to the input part of signal converter 30 of terminal device 15, and the output part of signal converter 30 is connected to output terminal Po of the connector C2 of terminal device 15. A termination resistor is connected to output terminal Po of connector C2 of terminal device 15.

In this manner, in communication system 1, management device 5 is connected to input terminal Pi of connector C1 of terminal device 10 closest to management device 5, and output terminal Po of connector C2 of terminal device 10 is connected to input terminal Pi of connector C1 of another terminal device 10 downstream of management device 5.

Here, each process of information processing part 50 and signal converter 30 executed to set a communication address of terminal device 10 will be described.

Management device 5 outputs pulse repetition signal sp for setting a communication address of terminal device 10. Pulse repetition signal sp is appropriately selected from, for example, AC signals of 1 kHz or more and 1024 kHz or less. The frequency of pulse repetition signal sp is desirably a power of 2 when the unit is kHz. Pulse repetition signal sp output from management device 5 is input to input terminal Pi of connector C1 via the feed wire.

Pulse repetition signal sp input to input terminal Pi of connector C1 is transmitted to information processing part 50 via one internal wire i1 and is transmitted to signal converter 30 via the other internal wire i2.

Information processing part 50 reads the frequency of pulse repetition signal sp input to input terminal Pi, and sets the communication address of terminal device 10 on the basis of the frequency.

Information processing part 50 includes storage 55 for storing various types of information. In storage 55, a storage table indicating a correspondence relationship between the frequency of pulse repetition signal sp and the communication address is stored in advance.

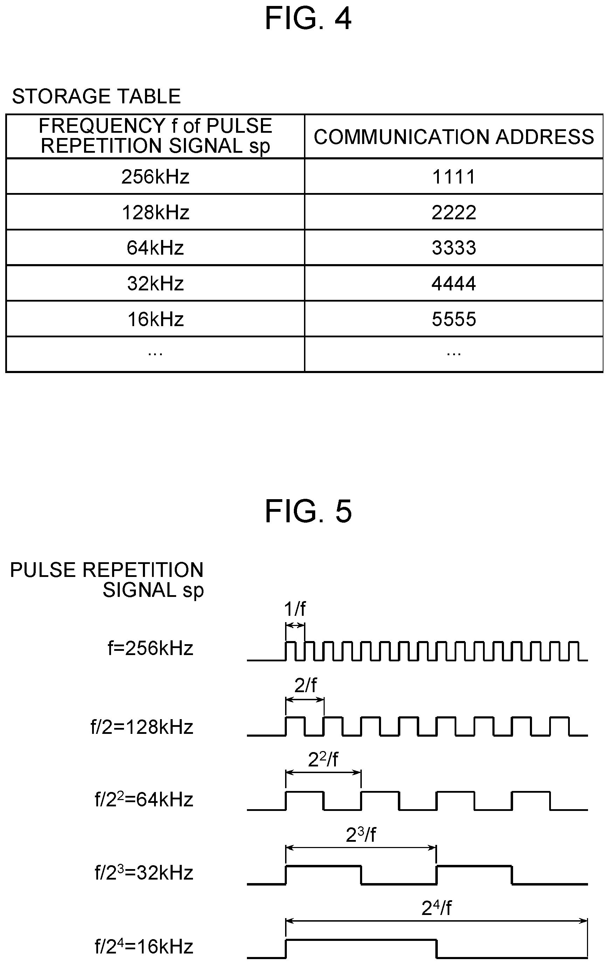

Fig. 4 is a diagram illustrating an example of the storage table stored in advance in terminal devices 10.

Information processing part 50 recognizes the communication address of its own terminal device 10 on the basis of the frequency of pulse repetition signal sp input to input terminal Pi and the above-described correspondence relationship stored in advance in storage 55. For example, as illustrated in Fig. 4, when the frequency of pulse repetition signal sp is 256 kHz, information processing part 50 recognizes that the communication address of its own terminal device 10 is "1111".

In a case where the communication address is continuously recognized after a lapse of a predetermined time (for example, 30 seconds), information processing part 50 sets the communication address as its own communication address. The case where the communication address is continuously recognized refers to, for example, a state where predetermined pulse repetition signal sp is continuously output from management device 5. Note that information processing part 50 may set the communication address as its own communication address by receiving address recording commands simultaneously transmitted from management device 5 to terminal device 10. The address recording command includes the communication address of management device 5, and terminal device 10 may return the communication address set by information processing part 50 to the communication address of management device 5.

The communication address set by information processing part 50 is saved in storage 55. Storage 55 includes a non-volatile storage device such as a flash memory, and the communication address is held in storage 55 even after terminal device 10 is powered off.

As described above, pulse repetition signal sp is also input to signal converter 30. Signal converter 30 converts input pulse repetition signal sp and outputs converted pulse repetition signal sp. Signal converter 30 is, for example, a frequency division circuit that divides the frequency of pulse repetition signal sp or a multiplier circuit that multiplies the frequency of pulse repetition signal sp.

Fig. 5 is a diagram illustrating an example of a signal input to signal converter 30 of terminal device 10 and a signal output from signal converter 30.

In a case where signal converter 30 is a frequency division circuit of two frequency divisions, pulse repetition signal sp input to signal converter 30 is output at a frequency of 1/2. For example, when pulse repetition signal sp of 256 kHz is input to signal converter 30, pulse repetition signal sp of 128 kHz is output, and when pulse repetition signal sp of 128 kHz is input to signal converter 30, pulse repetition signal sp of 64 kHz is output. Note that pulse repetition signal sp illustrated in Fig. 5 has a duty ratio of 0.5.

As illustrated in Fig. 3, since terminal devices 10 are connected in series via the feed wire, when pulse repetition signal sp having frequency =f is input to first terminal device 10 closest to management device 5, pulse repetition signal sp having frequency =f/2 is input to second terminal device 10. That is, n-th terminal device 10 (where n is an integer of 1 or more) receives pulse repetition signal sp having frequency of f/(2ⁿ⁻¹).

Pulse repetition signal sp input to each terminal device 10 is also input to information processing part 50, and a communication address corresponding to the frequency of pulse repetition signal sp is set for terminal device 10 on the basis of the storage table stored in storage 55. For example, a communication address corresponding to frequency f is set for first terminal device 10, and a communication address corresponding to frequency f/2 is set for second terminal device 10. That is, a communication address corresponding to frequency f/(2ⁿ⁻¹) is set for n-th terminal device 10.

Note that, in a case where signal converter 30 is a multiplier circuit, the frequency of pulse repetition signal sp input to signal converter 30 is doubled and output. Since terminal devices 10 are connected in series via the feed wire, when pulse repetition signal sp having frequency =f is input to first terminal device 10 closest to management device 5, pulse repetition signal sp having frequency = 2f is input to second terminal device 10. That is, n-th terminal device 10 receives pulse repetition signal sp having frequency of (2ⁿ⁻¹)f. In this case, a communication address corresponding to frequency f is set for first terminal device 10, and a communication address corresponding to frequency 2f is set for second terminal device 10. That is, a communication address corresponding to frequency (2ⁿ⁻¹)f is set for n-th terminal device 10.

The communication address set in each terminal device 10 is transmitted from terminal device 10 to management device 5 and stored in management device 5. When transmitting control signal sc corresponding to each terminal device 10, management device 5 also transmits control signal sc including information related to the communication address of terminal device 10. That is, control signal sc output from management device 5 includes information on the communication address set by information processing part 50. This enables bus communication between management device 5 and each terminal device 10.

Terminal device 10 according to the present exemplary embodiment includes input terminal Pi to which pulse repetition signal sp for setting a communication address is input, signal converter 30 that converts the frequency of pulse repetition signal sp input to input terminal Pi and outputs converted pulse repetition signal sp, and output terminal Po that outputs converted pulse repetition signal sp to another terminal device 10 different from terminal device 10 described above.

As in terminal device 10, the frequency of input pulse repetition signal sp is converted, and converted pulse repetition signal sp is output to another terminal device 10 different from the terminal device itself. Therefore, the communication address according to the frequency can be appropriately set.

Note that, although an example has been described in which information processing part 50 sets the communication address on the basis of the frequency of pulse repetition signal sp, the present invention is not limited the example. For example, information processing part 50 may set the communication address on the basis of the duty ratio of pulse repetition signal sp. In this case, a storage table indicating a correspondence relationship between the duty ratio of pulse repetition signal sp and the communication address may be stored in advance in storage 55, and information processing part 50 may set the communication address on the basis of the correspondence relationship stored in storage 55.

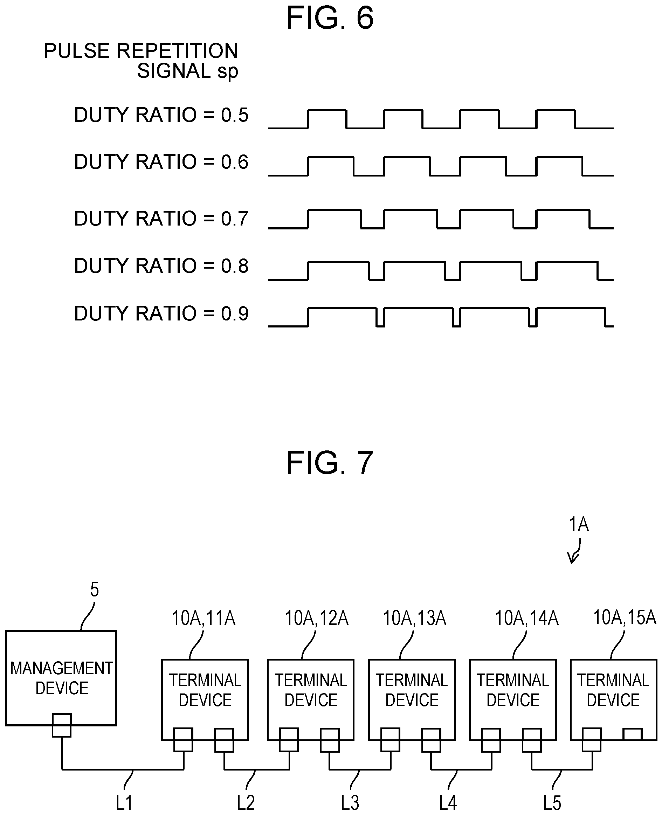

Fig. 6 is a diagram illustrating another example of a signal input to signal converter 30 of terminal device 10 and a signal output from signal converter 30. Note that Fig. 6 illustrates an example of a case where the frequency of pulse repetition signal sp is 64 kHz.

In a case where signal converter 30 is a modulation circuit, pulse repetition signal sp input to signal converter 30 is output with a duty ratio changed. For example, when pulse repetition signal sp having the duty ratio = 0.5 is input to signal converter 30, pulse repetition signal sp having the duty ratio = 0.6 is output, and when pulse repetition signal sp having the duty ratio = 0.6 is input to signal converter 30, pulse repetition signal sp having the duty ratio = 0.7 is output.

Since terminal devices 10 are connected in series via the feed wire, when pulse repetition signal sp having the duty ratio = 0.5 is input to first terminal device 10 closest to management device 5, pulse repetition signal sp having the duty ratio = 0.5 + 0.1 is input to second terminal device 10. That is, pulse repetition signal sp having the duty ratio = 0.5 + 0.1(n-1) is input to n-th terminal device 10. Signal converter 30 may modulate the duty ratio in a decreasing trend instead of modulating the duty ratio in an increasing trend.

Pulse repetition signal sp input to each terminal device 10 is also input to information processing part 50, and a communication address corresponding to the duty ratio of pulse repetition signal sp is set for terminal device 10 on the basis of the storage table stored in storage 55.

In this manner, terminal device 10 according to the present exemplary embodiment may include signal converter 30 that converts the duty ratio of pulse repetition signal sp input to input terminal Pi and outputs converted pulse repetition signal sp. The duty ratio of input pulse repetition signal sp is converted, and converted pulse repetition signal sp is output to another terminal device 10 different from the terminal device itself. Therefore, the communication address according to the duty ratio can be appropriately set.

### [Modification of exemplary embodiment]

Configurations of a communication system and a terminal device according to a modification of the exemplary embodiment will be described with reference to Figs. 7 to 9. In this modification, an example will be described in which the communication address is set by using pulse repetition signal sp output from the oscillation circuit instead of setting the communication address by using pulse repetition signal sp output from management device 5.

Fig. 7 is a diagram illustrating a schematic configuration of communication system 1A according to the modification of the exemplary embodiment.

As illustrated in Fig. 7, communication system 1A of the modification includes management device 5, a plurality of terminal devices 11A, terminal device 12A, terminal device 13A, terminal device 14A, and terminal device 15A. Hereinafter, some or all of the plurality of terminal devices 11A to 15A may be referred to as terminal device 10A.

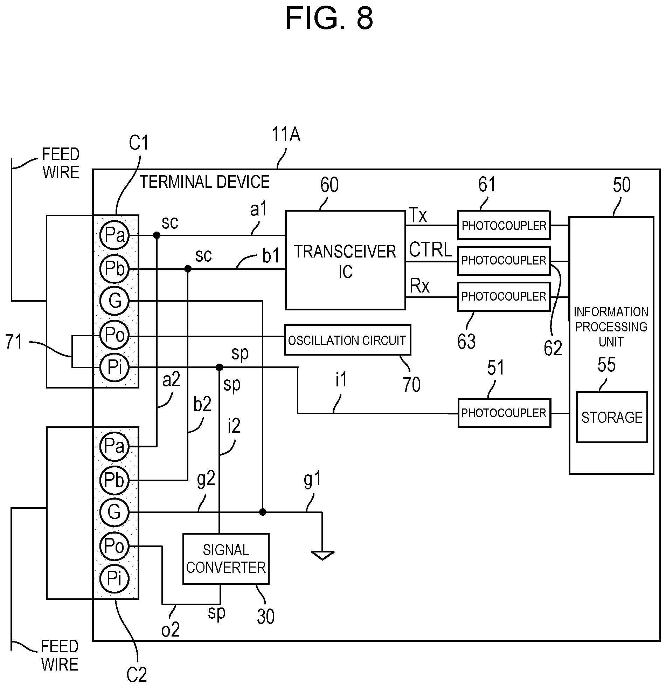

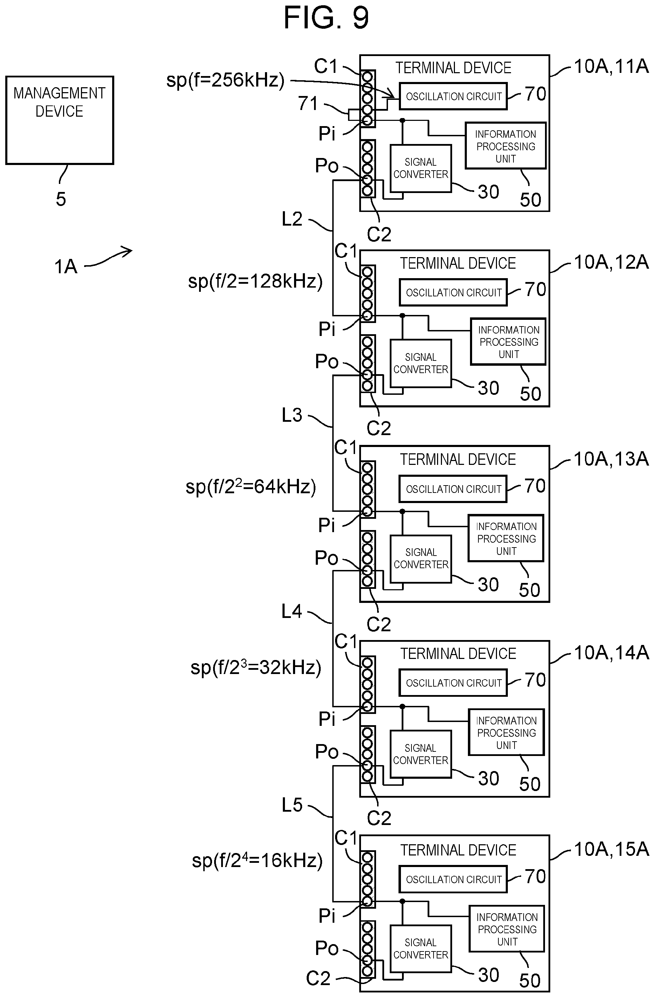

Fig. 8 is a diagram illustrating a circuit configuration of terminal device 11A according to the modification of the exemplary embodiment. Fig. 9 is a diagram illustrating a connection configuration of management device 5 and the plurality of terminal devices 10A included in communication system 1A according to the modification.

As in the exemplary embodiment, terminal device 10A of the modification includes connectors C1 and C2, signal converter 30, information processing part 50, and transceiver IC 60. Terminal device 10A of the present modification further includes oscillation circuit 70 that outputs pulse repetition signal sp.

As illustrated in Figs. 8 and 9, oscillation circuit 70 of terminal device 11A closest to management device 5 is connected to output terminal Po of connector C1. Output terminal Po of connector C1 is connected to input terminal Pi of connector C1 via short-circuit line 71. A connection relationship between terminal device 11A and terminal devices 11A to 12A downstream of terminal device 15A is similar to the connection relationship in the exemplary embodiment.

In the modification, management device 5 is connected to bus communication terminals Pa, Pb of connector C1 of terminal device 11A, but is not connected to input terminal Pi of connector C1. Oscillation circuit 70 of each of terminal devices 12A to 15A is not connected to output terminal Po of connector C1 unlike terminal device 11A. Output terminal Po of connector C1 of each of terminal devices 12A to 15A is not short-circuited to input terminal Pi of connector C1 unlike terminal device 11A.

Oscillation circuit 70 of terminal device 11A outputs pulse repetition signal sp for setting the communication address of each of terminal devices 11A to 15A. Pulse repetition signal sp is, for example, an AC signal of 1 kHz or more and 1024 kHz or less. Pulse repetition signal sp output from oscillation circuit 70 is input to input terminal Pi of connector C1 via short-circuit line 71.

As in the exemplary embodiment, pulse repetition signal sp input to input terminal Pi of connector C1 is transmitted to information processing part 50 via one internal wire i1 and is transmitted to signal converter 30 via the other internal wire i2. Information processing part 50 reads the frequency of pulse repetition signal sp input to input terminal Pi, and sets the communication address of terminal device 11A on the basis of the frequency. Communication addresses are set for the other terminal devices 12A to 15A as in the exemplary embodiment.

In terminal device 10A of the modification, the frequency of input pulse repetition signal sp is converted, and converted pulse repetition signal sp is output to another terminal device 10A different from the terminal device itself. Therefore, the communication address according to the frequency can be appropriately set.

In terminal device 10A of the modification, an example in which oscillation circuit 70 is an independent constituent element has been described. However, the present invention is not limited to the example, and a function similar to the function of oscillation circuit 70 may be provided in information processing part 50. In that case, terminal device 10A of the modification may have a configuration in which information processing part 50 is connected to output terminal Po of connector C1 via the photocoupler, and pulse repetition signal sp based on the signal output from information processing part 50 is input to output terminal Po of connector C1.

In terminal device 10A of the modification, output terminal Po of connector C1 and input terminal Pi are connected by using short-circuit line 71, but a plug connector including short-circuit line 71 may be attached to connector C1, and output terminal Po of connector C1 and input terminal Pi may be connected.

In terminal device 10A of the modification, an example in which oscillation circuit 70 is provided in each of terminal devices 11A to 15A has been described, but the present invention is not limited to the example. For example, oscillation circuit 70 may be provided only in terminal device 11A, and oscillation circuit 70 is not required to be provided in terminal devices 12A to 15A other than terminal device 11A.

In terminal device 10A of the modification, an example has been described in which communication system 1A includes management device 5, but communication system 1A is not required to include management device 5. For example, bus communication may be performed between terminal device 11A and terminal devices 12A to 15A with terminal device 11A as a master and terminal devices 12A to 15A as slaves.

### (Conclusions)

As described above, terminal device 10 (or terminal device 10A of the modification) according to the exemplary embodiment is a terminal device for which a communication address is set, and has the following configuration. That is, terminal device 10 (or 10A) includes input terminal Pi to which pulse repetition signal sp for setting a communication address is input, signal converter 30 that converts the frequency (or the duty ratio) of pulse repetition signal sp input to input terminal Pi and outputs converted pulse repetition signal sp, and output terminal Po that outputs converted pulse repetition signal sp to another terminal device 10 (or 10A) different from terminal device 10 (or 10A).

In this manner, input pulse repetition signal sp is converted, and converted pulse repetition signal sp is output to another terminal device 10 (or 10A) different from the terminal device itself. Therefore, the communication address according to pulse repetition signal sp can be appropriately set for terminal device 10 (or 10A).

Terminal device 10 (or 10A) may further include information processing part 50 that sets a communication address on the basis of the frequency or the duty ratio of pulse repetition signal sp input to input terminal Pi.

When information processing part 50 sets the communication address on the basis of pulse repetition signal sp, the communication address according to pulse repetition signal sp can be appropriately set for terminal device 10 (or 10A).

Terminal device 10 (or 10A) further includes storage 55 in which a correspondence relationship between a frequency or a duty ratio of pulse repetition signal sp and a communication address is stored in advance. Information processing part 50 may set the communication address on the basis of the frequency or the duty ratio of pulse repetition signal sp input to input terminal Pi and the correspondence relationship stored in storage 55.

In this manner, information processing part 50 can easily set the communication address of each terminal device 10 (or 10A) by setting the communication address by using the correspondence relationship stored in storage 55.

The communication address set by information processing part 50 may be stored in storage 55, and the communication address may be still held in storage 55 after terminal device 10 (or 10A) is powered off.

In this configuration, it is not necessary to set the communication address every time the power is turned on, and it is therefore possible to reduce labor for setting a communication address.

Signal converter 30 may convert the frequency by dividing the frequency of pulse repetition signal sp and output converted pulse repetition signal sp.

In this configuration, the frequency after division can be output to another terminal device 10 (or 10A) different from itself, and a communication address according to the frequency can be appropriately set for terminal device 10 (or 10A).

Terminal device 10A may further include oscillation circuit 70 that outputs pulse repetition signal sp.

In this configuration, the communication address can be set by pulse repetition signal sp of terminal device 10A without using pulse repetition signal sp of management device 5.

Terminal device 10 (or 10A) further includes bus communication terminals Pa, Pb different from input terminal Pi and output terminal Po. Control signal sc for controlling terminal device 10 (or 10A) is input to bus communication terminals Pa, Pb. Control signal sc may include information on the communication address set by information processing part 50.

In this configuration, input terminal Pi and output terminal Po for setting the communication address and bus communication terminals Pa, Pb for performing bus communication can be separately used.

Communication system 1 according to the exemplary embodiment includes the plurality of terminal devices 10 and management device 5 that outputs pulse repetition signal sp. The plurality of terminal devices 10 include at least first terminal device 11, second terminal device 12, and third terminal device 13. Management device 5 is connected to input terminal Pi of first terminal device 11, output terminal Po of first terminal device 11 is connected to input terminal Pi of second terminal device 12, and output terminal Po of second terminal device 12 is connected to input terminal Pi of third terminal device 13.

In this configuration, the communication address can be appropriately set for each of terminal devices 11 to 13 by using management device 5 and terminal device 11 to 13.

Each of the plurality of terminal devices 10 includes first connector C1 and second connector C2. Each of first connector C1 and second connector C2 has input terminal Pi and output terminal Po. Management device 5 is connected to information processing part 50 and the input part of signal converter 30 of first terminal device 11 via input terminal Pi of first connector C1 of first terminal device 11. The output part of signal converter 30 of first terminal device 11 is connected to information processing part 50 and the input part of signal converter 30 of second terminal device 12 via output terminal Po of second connector C2 of first terminal device 11 and input terminal Pi of first connector C1 of second terminal device 12. The output part of signal converter 30 of second terminal device 12 may be connected to information processing part 50 and the input part of signal converter 30 of third terminal device 13 via output terminal Po of second connector C2 of second terminal device 12 and input terminal Pi of first connector C1 of third terminal device 13.

In this configuration, the communication address can be appropriately set for each of terminal devices 11, 12, and 13 by using first connector C1 and second connector C2.

Terminal device 10 is bus-connected to management device 5 via bus communication terminals Pa, Pb different from input terminal Pi and output terminal Po. Management device 5 controls terminal device 10 by outputting control signal sc for controlling terminal device 10 to bus communication terminals Pa, Pb. Control signal sc may include information on the communication address set by terminal device 10.

In this configuration, terminal device 10 can be controlled by using the communication address set by management device 5 and terminal device 10.

### (Other exemplary embodiments)

Although the exemplary embodiment and the modifications of the exemplary embodiment have been described above, the present disclosure is not limited to the exemplary embodiment and the modifications.

For example, terminal device 10 according to the exemplary embodiment may be a communication device itself. Communication system 1 in this case may be configured such that management device 5 controls the body of a drive device or the body of an electric device via terminal device 10. Terminal device 10 may be an address setting device having only a function of setting a communication address.

Although an example in which the communication address is set for each terminal device 10 has been described in the exemplary embodiment, the communication address and the arrangement position of each terminal device 10 may be separately associated with each other after setting the communication address. For example, by outputting control signal sc including a predetermined communication address from management device 5 and turning on a pilot lamp or the like provided in predetermined terminal device 10, it is possible to associate the communication address and the arrangement position of each terminal device 10.

In the exemplary embodiment, an example in which the communication address is set by using the frequency of pulse repetition signal sp has been described, but the use of a wavelength that is the reciprocal of the frequency is substantially the same as the use of the frequency.

In the above exemplary embodiment, the constituent elements of a control device or the like may be implemented by dedicated hardware or by execution of software programs individually suitable for the constituent elements. Each constituent element may be implemented by a program execution part such as a central processing unit (CPU) or a processor reading and executing a software program recorded in a recording medium such as a hard disk or a semiconductor memory.

Each constituent element may be a circuit (or integrated circuit). A plurality of constituent elements may constitute one circuit as a whole or may be separate circuits. The circuit may be a general-purpose circuit or a dedicated circuit.

A comprehensive or specific mode of the present disclosure may be implemented by a system, a device, a method, an integrated circuit, a computer program, or a computer-readable, non-transitory recording medium such as a CD-ROM. In addition, the present disclosure may be implemented by an arbitrary combination of a system, an apparatus, a method, an integrated circuit, a computer program, and a non-transitory recording medium. For example, the present disclosure may be implemented as a program for causing a computer to execute control performed by a control device or the like included in each constituent element of the communication system.

The execution order of a plurality of processes in the operation of the communication system described in the exemplary embodiment is an example. The execution order of the plurality of processes may be changed, or the plurality of processes may be executed in parallel.

In addition, the present disclosure also includes a mode obtained by applying various modifications conceived by those skilled in the art to each exemplary embodiment, or a mode achieved by arbitrarily combining constituent elements and functions in each exemplary embodiment within a range not departing from the gist of the present disclosure.

### INDUSTRIAL APPLICABILITY

The terminal device and the communication system of the present disclosure can appropriately set the communication address for the terminal device. As described above, the terminal device and the communication system of the present disclosure are industrially useful.

### REFERENCE MARKS IN THE DRAWINGS

1, 1A: communication system
5: management device
10, 11, 12, 13, 14, 15, 10A, 11A, 12A, 13A, 14A, 15A: terminal device
30: signal converter
50: information processing part
51: photocoupler
55: storage
60: transceiver IC
61, 62, 63: photocoupler
70: oscillation circuit
71: short-circuit line
a1, a2, b1, b2, g1, g2, i1, i2, o2: internal wire
C1, C2: connector
G: ground terminal
L1, L2, L3, L4, L5: feed wire
Pa, Pb: bus communication terminal
Pi: input terminal
Po: output terminal
Rx, Tx: signal
sc, CTRL: control signal
sp: pulse repetition signal

## Claims

1. A terminal device for which a communication address is set, the terminal device comprising:
an input terminal to which a pulse repetition signal for setting the communication address is input;
a signal converter that converts a frequency or a duty ratio of the pulse repetition signal input to the input terminal and outputs a converted pulse repetition signal; and
an output terminal that outputs the converted pulse repetition signal to another terminal device different from the terminal device.

2. The terminal device according to Claim 1, further comprising
an information processing part that sets the communication address based on the frequency or the duty ratio of the pulse repetition signal input to the input terminal.

3. The terminal device according to Claim 2, further comprising
a storage in which a correspondence relationship between the frequency or the duty ratio of the pulse repetition signal and the communication address is stored in advance, wherein
the information processing part sets the communication address based on the frequency or the duty ratio of the pulse repetition signal input to the input terminal and the correspondence relationship stored in the storage.

4. The terminal device according to Claim 3, wherein
the storage stores the communication address set by the information processing part, and
the communication address is held in the storage after the terminal device is powered off.

5. The terminal device according to any one of Claims 1 to 4, wherein
the signal converter converts the frequency by dividing the frequency of the pulse repetition signal and outputs the converted pulse repetition signal.

6. The terminal device according to Claim 5, further comprising
an oscillation circuit that outputs the pulse repetition signal.

7. The terminal device according to any one of Claims 2 to 4, further comprising a bus communication terminal different from the input terminal and the output terminal, wherein
a control signal for controlling the terminal device is input to the bus communication terminal, and
the control signal includes information related to the communication address set by the information processing part.

8. A communication system comprising:
a plurality of terminal devices each of which is the terminal device according to any one of Claims 2 to 4; and
a management device that outputs the pulse repetition signal, wherein
the plurality of terminal devices include at least a first terminal device, a second terminal device, and a third terminal device,
the management device is connected to the input terminal of the first terminal device,
the output terminal of the first terminal device is connected to the input terminal of the second terminal device, and
the output terminal of the second terminal device is connected to the input terminal of the third terminal device.

9. The communication system according to Claim 8, wherein
each of the plurality of terminal devices includes a first connector and a second connector,
each of the first connector and the second connector includes the input terminal and the output terminal,
the management device is connected to the information processing part and an input part of the signal converter of the first terminal device via the input terminal of the first connector of the first terminal device,
an output part of the signal converter of the first terminal device is connected to the information processing part and an input part of the signal converter of the second terminal device via the output terminal of the second connector of the first terminal device and the input terminal of the first connector of the second terminal device, and
an output part of the signal converter of the second terminal device is connected to the information processing part and an input part of the signal converter of the third terminal device via the output terminal of the second connector of the second terminal device and the input terminal of the first connector of the third terminal device.

10. The communication system according to Claim 8, wherein
each of the plurality of terminal devices is bus-connected to the management device via a bus communication terminal different from the input terminal and the output terminal,
the management device controls each of the plurality of terminal devices by outputting a control signal for controlling each of the plurality of terminal devices to the bus communication terminal, and
the control signal includes information related to the communication address set by each of the plurality of terminal devices.
